(19) Europäisches Patentamt

European Patent Office

Office européen des brevets

(11) **EP 1 561 606 A1**

(12) **EUROPEAN PATENT APPLICATION**
published in accordance with Art. 158(3) EPC

(43) Date of publication:
**10.08.2005 Bulletin 2005/32**

(51) Int Cl.[7]: **B60C 17/04**, B21D 26/14,
B21D 53/26

(21) Application number: **03797631.3**

(22) Date of filing: **17.09.2003**

(86) International application number:
**PCT/JP2003/011829**

(87) International publication number:
**WO 2004/026596 (01.04.2004 Gazette 2004/14)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **17.09.2002 JP 2002269442
12.05.2003 JP 2003132535**

(71) Applicant: **Bridgestone Corporation**
**Tokyo 104-8340 (JP)**

(72) Inventors:
• **IZUMOTO, Ryuji**
**c/o BRIDGESTONE CORPORATION**
**Chuo-ku, Tokyo 104-8340 (JP)**

• **NAKAZAWA, Kazuma**
**c/o BRIDGESTONE CORPORATION**
**Chuo-ku, Tokyo 104-8340 (JP)**
• **INO, Fumitaka**
**c/o BRIDGESTONE CORPORATION**
**Chuo-ku, Tokyo 104-8340 (JP)**
• **HIRATA, Narukuni**
**c/o BRIDGESTONE CORPORATION**
**Chuo-ku, Tokyo 104-8340 (JP)**

(74) Representative: **Whalley, Kevin**
**Marks & Clerk**
**90 Long Acre**
**London WC2E 9RA (GB)**

(54) **RUNFLAT TIRE SUPPORT BODY AND METHOD OF PRODUCING THE SAME, AND RUNFLAT TIRE**

(57) The purpose of the present invention is to provide a support, a support manufacturing method, and a pneumatic run-flat tire by which predetermined strength is ensured while lightening is achieved. An aluminum tube 54 is electromagnetically formed and a support (supporting portion) is manufactured. Due to this, process hardening can be avoided and it can be formed in the desired shape. Further, at this time, due to exhaust holes 64 provided in the metal molds 52A, 52B, discharging of the air intervening between the metal molds 52A, 52B and the aluminum tube 54 at the time of forming is performed, and the support can be formed with good precision. The support 16 having the shell 26 made from an aluminum alloy formed in this manner is formed in a predetermined shape with good precision while being sufficiently lightened, and if a run-flat tire including this support 16 is installed on a vehicle, the gas mileage and handling of the vehicle can be improved.

FIG. 4A

FIG. 4B

FIG. 4C

**Description**

Technical Field

The present invention relates to a pneumatic run-flat tire annular support, which is arranged in the interior of a tire so that when the tire goes flat, it can travel coniderable distances in a flat condition, and to a manufacturing method therefor, and to a pneumatic run-flat tire utilizing this run-flat tire support.

Background of the Art

Pneumatic tires that are capable of run-flat travel have been disclosed in publications such as Japanese Patent Application Laid-Open (JP-A) No. 10-297226. That is, these tires, despite having gone flat so the tire's inner pressure is approximately 0 (gauge pressure) are stable and capable of travel (run-flat travel) for certain distances have been disclosed (hereafter referred to as "run-flat tire(s)"). In these tires, a run-flat tire support (hereafter simply referred to as "support") made from metal materials such as high-tensile steel or stainless steel is fitted to a portion of the rim inside the tire air chamber (core type).

The support used in these types of run-flat tires is provided with a cylindrical shell and rubber leg portions that are vulcanization adhered to each end portion of the shell. Shells that are shaped with two convex portions (double-mountain shaped) in the radial cross section of the tire fitted to the rim are known. An example of this type of shell involves a metal cylinder as the forming material made from high-tensile steel and the like and is manufactured by performing plasticization processing on the metal cylinder such as spatula-press processing, roll-forming processing, and hydroform processing.

Shells such as those described above are, in many cases in actual practice, formed from materials such as stainless and high-tensile steel in order to ensure sufficient strength. However, in cases where these are used as the material, the weight of the support becomes heavy causing disadvantages such as decline in the vehicle's handling and gas mileage.

In order to do away with these disadvantages, the selection of materials such as lightweight aluminum alloys (including aluminum with an Al purity of 99% or more) is being tried. In these cases, it is generally preferable to select JIS 5000, 6000 and 7000 aluminum alloys by which high strength can be obtained through heat processing in order to make the support one of sufficiently high strength. However, the elongation of the forming materials made from these aluminum alloys (hereafter referred to as "aluminum materials") is small, and with the conventionally performed hydroform forming and roll-forming processing, cracks and the like occur in the materials and it is thus difficult to stably manufacture supports.

This is especially true with hydroform forming, where due to its nature the processing (plastic deformation) time takes about 2 seconds, and process hardening of the aluminum material being processed proceeds at the time of deformation. Elongation thus becomes small and supports (shells) formed from aluminum materials have been disadvantageous in that cracks occur.

In order to do away with the above-described disadvantages, the inventors of the present application are proceeding with research and development regarding shell manufacturing with electromagnetic forming (electromagnetic tube expansion formation) using aluminum alloys for the materials. With this electromagnetic forming, aluminum materials can be processed into the desired shape in an extremely short amount of time (ordinarily within 0.1 seconds) making it possible to deform the aluminum materials in the super-plasticization deformation region and form the shell. The amount of plasticization deformation can effectively prevent the occurrence of cracks or bends due to the effects of process hardening even in the large portions.

The purpose of the present invention is, upon considering the above-described circumstances, to provide a run-flat tire support having a shell component in which sufficient lightening and high durability have been realized and which is formed in a predetermined shape with good precision, and to provide a pneumatic run-flat tire using the support.

Disclosure of Invention

In order to achieve the above purpose, the run-flat tire support of the first invention is arranged in the interior of the pneumatic tire and attached together with the pneumatic tire to the rim, the support being annular and capable of supporting the load at a time of run-flat travel, the run-flat tire suport being characterized in that it has a cylindrical shell component attached to the exterior periphery side of the rim, and the material for the shell component is an aluminum alloy that is electromagnetically formed.

The operation of the run-flat tire support of the first invention will be explained.

The forming material (aluminum material) is made from an aluminum alloy (including aluminum with an Al purity of 99% or more), and in cases where, for example, a cylindrical aluminum tube is used, the aluminum tube is subjected to electromagnetic tube expansion formation, which is one type of electromagnetic formation, whereby the shell component of the support is manufactured. Due to this, the shell component is efficiently formed in a short amount of time, and a lightweight shell component having a predetermined shape can be obtained.

By attaching supports provided with shell components thus having a predetermined shape and made to be lightweight to the pneumatic run-flat tires of a vehicle, the handling and gas mileage of the vehicle improve.

Further, the run-flat tire support of the second invention is characterized in that the shell component in the first invention has holes having diameters of 0.5mm to 10.0mm formed thereon.

The operation of the run-flat tire support of the second invention will be explained.

When a support provided with the shell component is attached to the inside of a pneumatic tire, the air chamber of the interior of the pneumatic tire becomes segmented by the annular support into a radial direction exterior side and interior side. Accordingly, when there are no holes in the shell component, the part that demonstrates the function of buffering vibrations from the road is limited to one portion of the air chamber (radial direction exterior side only), and in cases where there is no support, the air of the air chamber heated when traveling contacts the rim, whereby the cooling heat-dissipation action becomes limited to a portion of the air in the air chamber (radial direction interior side only) so there has been a risk of the air of other portions (radial direction exterior side) overheating.

However, in the second invention, holes are formed in the shell component so that when a support provided with this shell is attached to a pneumatic tire, the support in the air chamber is sandwiched, whereby the radial direction exterior side and the radial direction interior side are in communication, and the riding comfort and heat-dissipation action function well.

When the diameter of the holes is less than 0.5mm, however, the communicated state of the air is hindered, and the above-described action cannot be achieved well. On the other hand, if the diameter of the holes is greater than 10.0mm, the strength of the support becomes insufficient, and it becomes unable to support the load of the vehicle. Accordingly, by making the diameter of the holes within the range of 0.5mm to 10.0mm, the strength of the support can be ensured while favorably attaining the above-described action.

Moreover, the run-flat tire support of the third invention is characterized in that in the first or second invention, the aluminum alloy is any one of Al-Mg aluminum alloy, AL-Mg-Si aluminum alloy, and Al-Zn aluminum alloy.

The operation of the run-flat tire support of the third invention will be explained.

A shell component is formed using any one of Al-Mg aluminum alloys (e.g., JIS 5000), Al-Mg-Si aluminum alloys (e.g., JIS 6000), and Al-Zn aluminum alloys (e.g., JIS 7000) as a material, and a support having sufficient strength can be manufactured by performing predetermined heat processing on the shell component as needed.

Moreover, the run-flat tire support of the fourth invention is characterized in that in any of the first through third inventions, the shell component has two convex portions projecting toward the radial direction exterior side in the radial direction cross section.

The operation of the run-flat tire support of the fourth invention will be explained.

In a case where a support provided with the above-described shell component is installed in a pneumatic tire, when the pneumatic tire goes flat and the shell component supports the load, the convex portions projecting towards the radial direction exterior side come in contact with the treads. Accordingly, the load acting upon the shell component can be dispersed and supported well due to the existence of the two convex portions.

Further, the run-flat tire support of the fifth invention is characterized in that in the fourth invention, the ratio B/A of the largest exterior diameter of the convex portions A and the smallest exterior diameter B of the concave portion formed between the two convex portions is from 0.60 to 0.95.

The operation of the run-flat tire support of the fifth invention will be explained.

When the tread portion of the pneumatic tire receives load from the road at the time of run-flat travel, the tread portion deforms so as to expand along the widthwise direction towards the interior periphery side, and a phenomenon occurs such that the center vicinity of the tread portion enters between the two convex portions (within the concave portion). At this time, making the ratio B/A of the largest exterior diameter of the convex portions A and the smallest exterior diameter B of the concave portion formed between the two convex portions in the shell component from 0.60 to 0.95 acts to divide the force to each of the two convex portions in the widthwise exterior side directions in the shell component that has received the load from the road through the tread portion, and by this division of force, elastic deformation occurs so as to expand in the support towards the widthwise direction exterior sides. As a result, at the time of run-flat travel, the pressing force of both end portions (leg portions) in the support to the rim increases and the connecting strength of the support to the rim becomes higher, so shifting of the support from the rim and slipping off from the rim can be prevented.

Further, the run-flat tire support of the sixth invention is characterized in that the board thickness of the shell component in any of the first through fifth inventions is 0.5mm to 7.0mm.

Further, the run-flat tire support of the seventh invention is arranged in the interior of a pneumatic tire and attached to a rim together with the pneumatic tire, the run-flat tire support being annular and capable of supporting a load at a time of run-flat travel, the run-flat tire support being characterized in that it is provided with at least two convex portions in a radial direction cross section of the support, each projecting towards an exterior side in the radial direction, and has a cylindrical shell component attached to an exterior periphery side of the rim, and cross sections along the peripheral direction in the vicinities of peak portions positioned at outermost periphery sides of the convex portions are honeycombed ribs that are successively formed on the entire periphery.

The operation of the run-flat tire support of the seventh invention will be explained.

A support having at least two convex portions is arranged in the interior of a pneumatic tire and when carrying out run-flat travel with this pneumatic tire, run-flat travel is performed while the convex portions remain in contact with the treads. Accordingly, by providing at least two or more convex portions, load from the road is dispersed to many points and acts upon the shell component so the load of the shell component during run-flat travel can be reduced.

Nonetheless, at the time of run-flat travel, a load from the road concentrates on the vicinities of the peak portions of the convex portions in the shell component during travel, and the vicinities of the peak portions of the convex portions in the shell component become the portions where damage such as cracks and dents easily occur. The strength of these vicinities of the peak portions has a large effect on the durability of the shell component.

Therefore, in the run-flat tire support of the seventh invention, the load-bearing strength such as bending strength and buckling strength of the vicinities of the peak portions of the convex portions can be improved so as to be approximately equal to the strength when thickened to the same degree as the thickness of the ribs due to formation of ribs extending along the entire periphery in the peripheral direction of the vicinities of the peak portions of the convex portions, so the occurrence of damage such as cracks and dents in the vicinities of the peak portions of the convex portions due to load such as shock from the road can be effectively prevented.

At this time, by making the cross-sectional shapes along the peripheral direction of the ribs approximately honeycomb-shaped (usually hexagonal) the strength relative to the vicinities of the peak portions of the convex portions can be more effectively improved than in cases where ribs of other shapes (e.g., ring-shaped ribs extending along the peripheral direction) are provided.

Reference here to honeycombed ribs means a broad definition of ribs used in a regular honeycomb structure, e.g., staggered hexagons, square shapes linked with six partitions at four points, sine wave shapes and multiple wave shapes.

Further, the run-flat tire support of the eighth invention is characterized in that in the seventh invention, holes having diameters of 0.5mm to 10.0mm are formed in the shell component.

Further, the run-flat tire support of the ninth invention is characterized in that in the seventh invention or eighth invention, the material for the shell component is any one of Al-Mg aluminum alloy, Al-Mg-Si aluminum alloy, and Al-Zn aluminum alloy and is formed by electromagnetic forming.

With regard to the operation of the run-flat tire support of the ninth invention, it is common to that of the third invention, so explanation thereof is omitted.

Furthermore, the run-flat tire support manufacturing method of the tenth invention for manufacturing a support which is arranged in the interior of a pneumatic tire and attached to a rim together with the pneumatic tire, the run-flat tire support being annular and capable of supporting a load at a time of run-flat travel, the method being characterized in that it includes: a first process for setting a cylindrical aluminum tube made from an aluminum alloy in a forming jig; a second process for loading the forming jig in order to prevent the aluminum tube from shifting position in upper or lower directions; and a third process in which a coil is inserted into the aluminum tube and an electric current run to the coil, where the aluminum tube is deformed to expand to an exterior side in a radial direction and a cylindrical shell component that is installed to the exterior periphery side of a rim is formed.

The operation of the support manufacturing method of the tenth invention will be explained.

When the shell component of the support is formed by hydroforming, there is a risk of the deformation being hindered by process hardening at the time of deformation.

However, in the support manufacturing method of the tenth invention, the shell component is formed by setting the aluminum tube within a forming jig and after loading the forming jig in order to prevent shifting of position, inserting a coil in the aluminum tube and running an electric current to the coil, in other words, by electromagnetic formation (electromagnetic tube expansion formation) so as to deform the aluminum tube by expanding it and thus form the shell component. Because the shell component is formed with this kind of electromagnetic formation, the forming time becomes 0.1 seconds or less, and there is no risk of the deformation being hindered by process hardening at the time of deformation. In other words, the shell component can be formed into the desired shape.

For a shell component having honeycombed ribs in the vicinities of the peak portions, this can be efficiently manufactured by electromagnetic forming (electromagnetic tube expansion formation) a material such as an Al-Mg aluminum alloy, Al-Mg-Si aluminum alloy, and Al-Zn aluminum alloy.

Further, the support manufacturing method of the eleventh invention is characterized in that in the tenth invention, after the third process, it includes a process wherein holes having diameters of 0.5mm to 10.0mm are formed in the shell component.

The operation of the support manufacturing method of the eleventh invention will be explained.

By providing holes having diameters of 0.5mm to 10.0mm in the shell component formed in a predetermined shape, the riding comfort and heat-dissipation action during regular travel with the run-flat tire having the support provided with this shell component installed in the pneumatic tire can be well ensured.

Moreover, the manufacturing method for the run-flat tire support of the twelfth invention is a run-flat tire support manufacturing method for manufacturing a support which is arranged in the interior of a pneumatic tire and attached to a rim together with the pneumatic tire, the run-flat tire support being annular and capable of supporting a load at a time of run-flat travel, the method being characterized in that it includes: a first process for setting a cylindrical aluminum tube made from an aluminum alloy inside a forming jig; a second process for loading the forming jig in order to prevent the aluminum tube from shifting position in upper or lower directions; and a third process in which a coil is inserted into the aluminum tube and an electric current is run to the coil, whereby the aluminum tube is transformed to expand to an exterior side in a radial direction and a cylindrical shell component that is installed to the exterior periphery side of a rim is formed while holes having diameters of 0.5mm to 10.0mm are formed in the support at the time of expanding deformation.

The operation of the support manufacturing method of the twelfth invention will be explained.

When aluminum alloys are selected as the material in order to lighten the shell component of the support, there is a risk of the deformation being hindered by process hardening at the time of deformation when forming by hydroforming.

However, in the manufacturing method for the support of the twelfth invention, the shell component is formed by setting the aluminum tube within a forming jig, and inserting a coil in the aluminum tube and running an electric current to the coil, in other words, by electromagnetic formation (electromagnetic tube expansion formation) so as to deform the aluminum tube by expanding it. Because the shell component is formed with this kind of electromagnetic formation, the forming time is extremely short (0.1 seconds or less), and there is no risk of the deformation being hindered by process hardening at the time of deformation. In other words, the shell component can be formed into the desired shape.

Then by arranging the support provided with the shell component in which holes having diameters of 0.5mm to 10.0mm are formed and attaching this pneumatic run-flat tire to the vehicle, the riding comfort of the vehicle and the heat-dissipation action can be ensured well. Since the holes can be formed simultaneously with the expanding deformation of the aluminum tube (forming of shell component) the manufacturing efficiency can be improved all the more.

Moreover, the run-flat tire support manufacturing method of the thirteenth invention is a method for manufacturing the run-flat tire support of any one of claims 7 to 9, the method being characterized in that it includes: a first process for setting a cylindrical aluminum tube made from an aluminum alloy inside a forming jig; a second process for loading the forming jig in order to prevent the aluminum tube from shifting position in upper or lower directions; and a third process in which a coil is inserted into the aluminum tube and an electric current is run to the coil, whereby the aluminum tube is deformed to expand to the exterior side in the radial direction and the shell component is formed, wherein in the third process, by protruding portions provided in interior periphery surface of the forming jig and having a honeycombed cross section along the peripheral direction, the vicinities of the peak portions of the convex portions are plastically deformed, whereby the ribs are formed in the vicinities of the peak portions.

The operation of the support manufacturing method of the thirteenth invention will be explained.

In cases where aluminum alloys are selected as the material in order to lighten the shell component of the support, when forming with, for example, hydroforming, there is a risk of the plastic deformation being hindered by increased deformation resistance due to the effects of process hardening at the time of plastic deformation.

However, in the manufacturing method of the present invention, the shell component is formed by setting the aluminum tube within a forming jig and inserting a coil in the aluminum tube and running an electric current to the coil, in other words, by electromagnetic formation (electromagnetic tube expansion formation) so as to deform the aluminum tube by expanding it, and form a shell component having at least two convex portions. Because the shell component is formed with this kind of electromagnetic formation, the forming time is extremely short (0.1 seconds or less) when compared with hydroforming, and there is no risk of the deformation being hindered by process hardening at the time of plastic deformation. In other words, the deformation of the aluminum tube progresses in the super-plastic deformation region that can deform the material without receiving the effects of process hardening so the shell component can be formed into the desired shape without allowing the occurrence of cracks and bends.

However, when forming a shell component having convex portions that project towards the exterior side in the radial direction with the above-described electromagnetic forming, the vicinities of the peak portions of the convex portions where the deformation amount is large are spread so the thickness thereof becomes thinner than other portions. The vicinities of the peak portions of the convex portions of this shell component are the portions where load from the road concentrates at the time of run-flat travel, and when this shell is used for run-flat travel, there is a risk of dents or cracks occurring in the vicinities of the peak portions of the convex portions due to the load from the road.

Therefore, in the support manufacturing method of the thirteenth invention, when electromagnetically forming a shell component having convex portions, by protruding portions provided in interior periphery surface of the forming jig and having a honeycombed cross section along the peripheral direction, the vicinities of the peak portions of the convex portions are plastically deformed, whereby the ribs are formed in the vicinities of the peak portions. Due to this, an effect can be obtained where the vicinities of the peak portions of the convex portions, which become thinner than other portions, become approximately equal to a case where thickening to the thickness of the ribs is carried out, and the load bearing strength such as bending strength and buckling strength of the vicinities of the peak portions of the convex portions can be greatly increased. As a result, the occurrence of damage such as cracks and dents in the vicinities of the peak portions of the convex portions due to load from the road such as shock can be effectively prevented.

At this time, the honeycombed ribs, like the convex portions of the shell component, are formed in the superplastic deformation region that can deform materials without receiving the effects of process hardening, so ribs of the desired shape can be formed without allowing the occurrence of cracks and bends.

Moreover, by making the cross-sectional shapes along the peripheral direction of the ribs approximately honeycomb-shaped (usually hexagonal) the strength relative to the vicinities of the peak portions of the convex portions can be increased more efficiently than in cases of providing ribs having other shapes (e.g., ring-shaped ribs extending along the peripheral direction).

Reference here to honeycombed ribs means a broad definition of ribs used in a regular honeycomb structure, e.g., staggered hexagons, square shapes linked with six partitions at four points, sine wave shapes and multiple wave shapes.

Moreover, the run-flat tire support manufacturing method of the fourteenth invention is characterized in that in the third process of the thirteenth invention, by protruding portions provided in interior periphery surface of the forming jig and having a honeycombed cross section along the peripheral direction, the vicinities of the peak portions of the convex portions are plastically deformed, whereby the ribs are formed in the vicinities of the peak portions while holes having diameters of 0.5mm to 10.0mm are formed in the shell component.

Moreover, the run-flat tire support manufacturing method of the fifteenth invention is characterized in that after the third process of the thirteenth invention, it includes a process for forming holes having diameters of 0.5mm to 10.0mm in the shell component.

Moreover, the run-flat tire support manufacturing method of the sixteenth invention is characterized in that in the third process of any one of the tenth through fifteenth inventions, the air intervening between the aluminum tube and the forming jig is discharged to the exterior through exhaust holes provided in the forming jig.

The operation of the support manufacturing method of the sixteenth invention will be explained.

In the sixteenth invention, the support is formed by electromagnetically forming an aluminum tube, and since the aluminum tube can be instantaneously deformed into the desired shape by electromagnetic forming (usually within 0.1 seconds), the air intervening between the aluminum tube and the metal molds cannot be discharged well at the time of expanding deformation, so there is a risk of the support not being formed well.

Further, the run-flat tire of the seventeenth invention is characterized in that it has a toroidal carcass formed between a pair of bead cores, side rubber layers forming the tire side portions arranged at the tire axial direction exterior side of the carcass, and a tread rubber layer forming the tread portion arranged at the tire axial direction exterior side of the carcass , a tire installed to the rim, and the support of any one of the first through ninth inventions arranged in the interior of the tire and attached with the tire to the rim.

The operation of the pneumatic run-flat tire of the seventeenth invention will be explained.

When the inner pressure of the pneumatic tire decreases, run-flat travel is made possible due to the support arranged inside the tire air chamber supporting the tread portion in place of the side rubber layer.

At this time, since the shell component of the support is formed by electromagnetic forming from an aluminum alloy, it can be formed well into the desired shape, and further, it is lightened. Accordingly, improvement of the handling and gas mileage of a vehicle having this run-flat tire installed thereon can be achieved.

Moreover, the run-flat tire support of the eighteenth invention is characterized in that it is arranged in the interior of a pneumatic tire and attached to the rim together with the pneumatic , is an annular support that can support a load during run-flat travel, it is provided with at least two convex portions that each project towards the exterior side in the radial direction in the radial direction cross section of the support, it has a cylindrical shell installed to the exterior periphery side of the rim, and multiple holes that penetrate in the thickness direction are formed in the convex portions.

The operation of the run-flat tire support of the eighteenth invention will be explained.

At the time of run-flat travel, the load acts upon the run-flat tire support instead of the pneumatic tire. In a case where the board thickness of the shell component has been reduced in order lighten the run flat tire, there is a risk of the shell component deforming due to a decline in sturdiness. Nonetheless, in the eighteenth invention, decrease in strength can be suppressed while lightening the shell component even without thinning the shell component, due to the formation of multiple holes in the convex portions in the shell component.

Moreover, the run-flat tire support of the nineteenth invention is characterized in that, in the eighteenth invention, the material of the shell component is any one of an aluminum alloy, high-tensile steel, and stainless steel.

The operation of the run-flat tire support of the nineteenth invention will be explained.

The shell component is formed from any one of an aluminum alloy, high-tensile steel, and stainless steel as the material, and by subjecting it to predetermined heat processing when necessary, a shell component having good balance between strength and weight can be obtained, sothat, in comparison to cases where the shell component is formed from other materials, a light support having sufficient strength can be manufactured.

Further, the run-flat tire support of the twentieth invention is characterized in that, in the eighteenth and nineteenth inventions, the ratio of the area of the multiple holes relative to the area including the multiple holes in the convex portions is from 1 to 50%.

The operation of the run-flat tire support of the twentieth invention will be explained.

When the ratio of the area of the multiple holes relative to the area including the multiple holes in the convex portions is less than 1%, the lightening effect on the shell component is small and sufficient air distribution between the space of the interior periphery side and the space of the exterior periphery side sectioned off by the shell component inside the run-flat tire cannot be obtained. On the other hand, in a case where the ratio of the area of the multiple holes relative to the area including the multiple holes in the convex portions exceeds 50%, the strength and durability of the shell component greatly decreases.

Accordingly, the lightening effect of the shell component can be ensured while maintaining the strength and durability in the shell component by making the ratio of the area of the multiple holes relative to the area including the multiple holes in the convex portions 1% to 50%. Further, since the air distribution between the space of the interior periphery side of the inside of the run-flat tire and the space of the exterior periphery side sectioned off by the shell component can be sufficiently ensured, overheating of portions facing the exterior periphery side in the pneumatic tire can be effectively prevented due to the cooling effect of the rim.

Further, the run-flat tire support of the twenty-first invention is characterized in that, in the eighteenth to twentieth inventions, from the end portions of the exterior sides in the widthwise direction of the convex portions in the shell component to the side portions extending to the exterior periphery sides, multiple holes that penetrate in the thickness direction are formed.

The operation of the run-flat tire support of the twenty-first invention will be explained.

In the twenty-first invention, the shell component can be further lightened by forming multiple holes in, in addition to the convex portions in the shell component, the side portions in comparison with a case where holes are formed in the convex portions only.

Further, the run-flat tire support of the twenty-second invention is characterized in that, in the twenty-first invention, the ratio of the areasof the multiple holes relative to the area including the multiple holes in the side portions is from 1 to 50%.

The operation of the run-flat tire support of the twenty-first invention will be explained.

When the ratio of the area of the multiple holes relative to the area including the multiple holes in the side portions is less than 1%, the lightening effect on the shell component is small and sufficient air distribution between the space of the interior periphery side and the space of the exterior periphery side sectioned off by the shell component inside the run-flat tire cannot be obtained. On the other hand, in a case where the ratio of the area of the multiple holes relative to the area including the multiple holes in the side portions exceeds 50%, the strength and durability of the convex portions of the shell component greatly decrease.

Accordingly, compared to a case where holes are formed in the convex portions only, strength and durability in the shell component can be maintained while lightening the shell component even further by making the ratio of the area of the multiple holes relative to the area including the multiple holes in the convex portions 1% to 50%. Further, since the air distribution between the space of the interior periphery side of the inside of the run-flat tire and the space of the exterior periphery side sectioned off by the shell component can be further improved, overheating of portions facing the space of the exterior periphery side in the pneumatic tire can be further effectively prevented due to the cooling effect of the rim.

Further, the run-flat tire support of the twenty-third invention is characterized in that, in the eighteenth to twenty-second inventions, the spaces between hole edges of the holes arranged so as to adjoin each other are 1mm or more.

The operation of the run-flat tire support of the twenty-third invention will be explained.

In a case where the spaces between hole edges of the holes arranged so as to adjoin each other are 1mm or less, when the convex portions and side portions in the shell component press against the pneumatic tire during run-flat travel, it becomes easier for fissures to occur between the holes arranged so as to adjoin each other due to friction with the pneumatic tire. Accordingly, by making the spaces between the hole edges of the holes arranged so as to adjoin each other 1mm or more, damage to the shell component due to fissures between the hole edges of the holes during run-flat travel can be prevented.

Further, the run-flat tire of the twenty-fourth invention is characterized in that it has a toroidal carcass formed between a pair of bead cores, side rubber layers forming the tire side portions arranged at the tire axial direction exterior side of the carcass, a tread rubber layer forming the tread portion arranged at the tire radial direction exterior side of the carcass, a pneumatic tire installed to a rim, and the run-flat tire support recited in any of claims 18 to 23 arranged in the interior of the tire and attached to the rim together with the tire.

The operation of the run-flat tire of the twenty-fourth invention will be explained.

When the inner pressure of the pneumatic tire decreases, run-flat travel is made possible due to the support arranged inside the tire air chamber supporting the tread portion in place of the side rubber layer.

At this time, the support can be lightened without decreasing the strength and durability of the support by forming multiple holes in the shell component of the support. Accordingly, a vehicle that has this run-flat tire attached thereon can realize improved handling and gas mileage.

Brief Description of the Drawings

Fig. 1 is a cross-sectional drawing of a rim of a pneumatic run-flat tire of a first embodiment of the present invention when installed.

Fig. 2 is a partial perspective drawing of a shell of a support of the first embodiment of the present invention.

Fig. 3 is a structural diagram of a forming device for the support of the first embodiment of the present invention.

Figs. 4A, 4B and 4C are explanatory diagrams of the manufacturing process for the support of the first embodiment of the present invention.

Fig. 5 is a cross-sectional drawing of a rim of a pneumatic run-flat tire of a second embodiment of the present invention when installed.

Fig. 6 is a partial perspective drawing of a shell of a support of the second embodiment of the present invention.

Fig. 7 is a structural diagram of a forming device for the support of the second embodiment of the present invention.

Figs. 8A, 8B and 8C are explanatory diagrams of the manufacturing process for the support of the second embodiment of the present invention.

Fig. 9 is a cross-sectional drawing of a rim of a pneumatic run-flat tire of a third embodiment of the present invention when installed.

Fig. 10 is a partial perspective drawing of a shell of a support of the third embodiment of the present invention.

Fig. 11A is a structural diagram of a forming device for the support of the third embodiment of the present invention.

Fig. 11B is a plan view of a rib transferring portion provided on the forming surface of the metal molds shown in Fig. 11A.

Fig. 12 is a perspective diagram showing a view of a variant example of the shell of the second embodiment of the present invention.

Fig. 13 is a plan view showing an example in which holes are formed with a punched pattern of 60° round staggered holes in the shell of the present invention.

Fig. 14 is a plan view showing an example in which holes are formed with a punched pattern of 45° round staggered holes in the shell of the present invention.

Best Modes for Practicing the Invention

Hereafter, the run-flat tire support, the manufacturing method therefor, and the run-flat tire using the support of the embodiments of the present invention will be explained while referring to the drawings.

[First Embodiment]

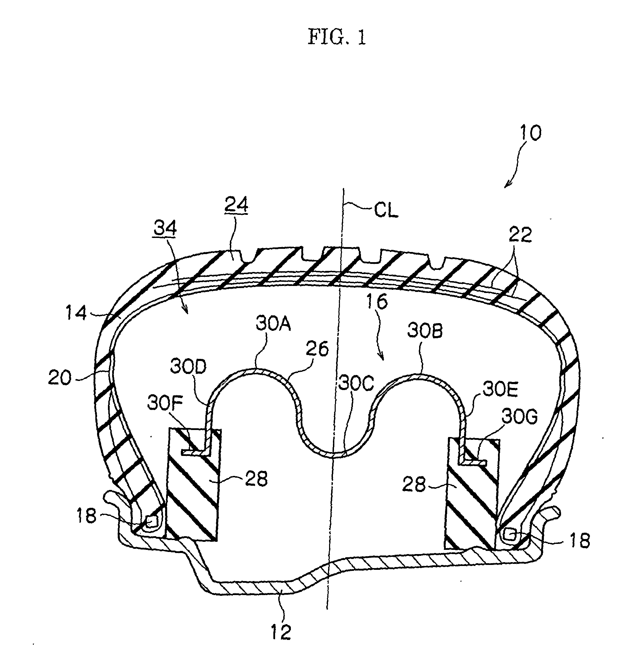

The support and manufacturing method for the support, and the pneumatic run-flat tire of the first embodiment of the present invention will be explained while referring to Figs. 1 through 4.

Here, as shown in Fig. 1, a run-flat tire 10 has a pneumatic tire 14 and a support 16 attached to a rim 12. The rim 12 is a standard rim that corresponds to the size of the pneumatic tire 14.

The standard rim is a regulation rim of the JATMA (Japan Automobile Tire Manufacturers Association) 2002 Year Book, the standard air pressure corresponds to the maximum load capability of the JATMA (Japan Automobile Tire Manufacturers Association) 2002 Year Book, and the standard load corresponds to the maximum load capacity when applied to a single wheel of the JATMA (Japan Automobile Tire Manufacturers Association) 2002 Year Book.

Outside of Japan, load is considered the maximum load (maximum load capability) of a single wheel in a size applied to the following recited standards. Inner pressure is considered the air pressure relative to the maximum load (maximum load capability) of a single wheel recited in the following standards. Rim is considered the standard rim in applicable sizes recited in the following standrads (or "approved rim" and "recommended rim").

The standards are decided by the industrial standards in force in the region where the tire is produced or used. For example, in the U.S.A., the standards are decided by the Year Book of The Tire and Rim Association, Inc., and in Europe, by the Standards Manual of The European Tire and Rim Technical Organization.

As shown in Fig. 1, the pneumatic tire 14 has a pair of bead portions 18, a toroidal carcass 20 that extends from both bead portions 18, multiple belt layers 22 (in the present embodiment, two) positioned on the crown portion of the carcass 20, and a tread portion 24 formed in the upper portions of the belt layers 22.

The support 16 arranged in the interior of the pneumatic tire 14 is the cross-sectionally shaped object shown in Fig. 1 formed in a ring shape, and it has a shell 26 and rubber leg portions 28 vulcanization adhered at each end portion of the shell 26.

In cases where the support 16 is arranged in the interior side of the pneumatic tire 14, the leg portions 28, when attached to the rim of the pneumatic tire 14, are attached to the interior side of the rim 12.

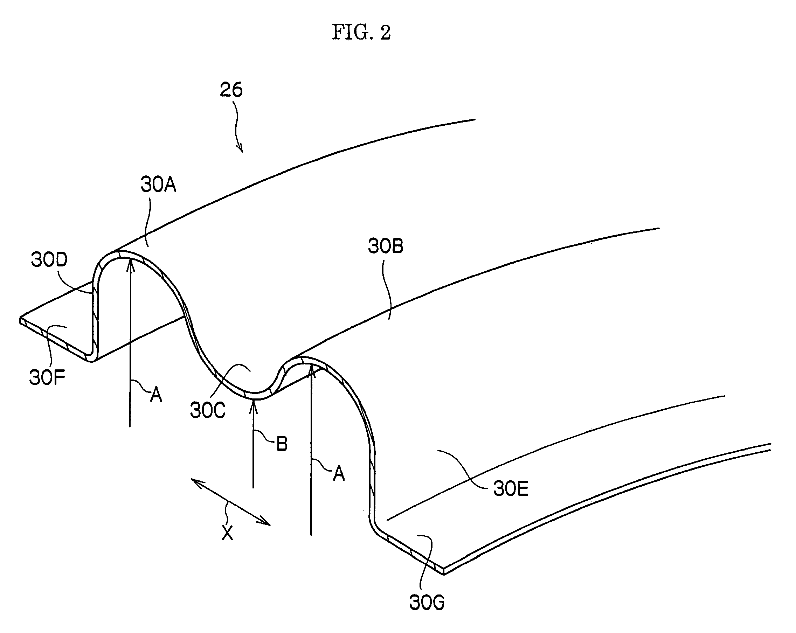

Meanwhile, the shell 26 is formed from one plate, as seen in the cross-sectional shape shown in Fig. 2, and has convex portions 30A, 30B protruding towards the exterior side in the radial direction, and between these, a concave portion 30C formed so as to protrude towards the interior side in the radial direction; and further, side portions 30D, 30E that support the load are formed at the exterior sides, in the width direction (X direction), of the convex portions 30A, 30B (the sides opposite to the concave portion 30C). At the end portions of the side portions 30D, 30E at the interior side in the radial direction (the end portions on the rim side), flange portions 30F, 30G are formed to extend approximately along the tire rotation axis direction towards the exterior.

Furthermore, at the flange portions 30F, 30G of the shell 26, multiple through-holes per flange (omitted from drawings) that each penetrate in the respective thickness directions can be arranged along the peripheral direction at approximately equal. By doing so, this increases the surface areas of the contact portions of the flange portions 30F, 30G with the leg portions 28 while generating an anchor effect with the rubber material filled inside the through-holes, whereby the connecting strength between the leg portions 28 and the flange portions 30F, 30G can be greatly increased.

In order to ensure strength while achieving lightening of the weight, it is preferable that the shell 26 be formed from any one of an Al-Mg aluminum alloy (e.g., JIS 5000), an Al-Mg-Si aluminum alloy (e.g., JIS 6000) and an Al-Zn aluminum alloy (e.g., JIS 7000) as the material by which high strength can be obtained by heat processing. When forming the shell 26 from aluminum alloys besides these (e.g., JIS 1100, 3003) the strength of the aluminum alloy is lower and the thickness of the shell 26 must be increased in order to ensure a predetermined strength. There are cases where the weight increases to even more than when using materials such as steel.

Further, the shell 26 is manufactured by electromagnetic formation (electromagnetic tube expanding formation) of a thin cylindrical aluminum tube made from an aluminum alloy. The manufacturing method will be explained in detail later, but by instantaneously forming with electromagnetic formation, the shell can be formed into a predetermined shape with good accuracy without the effects of process hardening that accompany plastic deformation of aluminum alloys.

In this manner, the run-flat tire 10 having arranged therein the support 16 including the shell 26, which is electromagnetically formed from a predetermined aluminum alloy, ensures a predetermined strength while lightening the weight, and the handling and gas mileage of the vehicle equipped with the run-flat tire 10 improve.

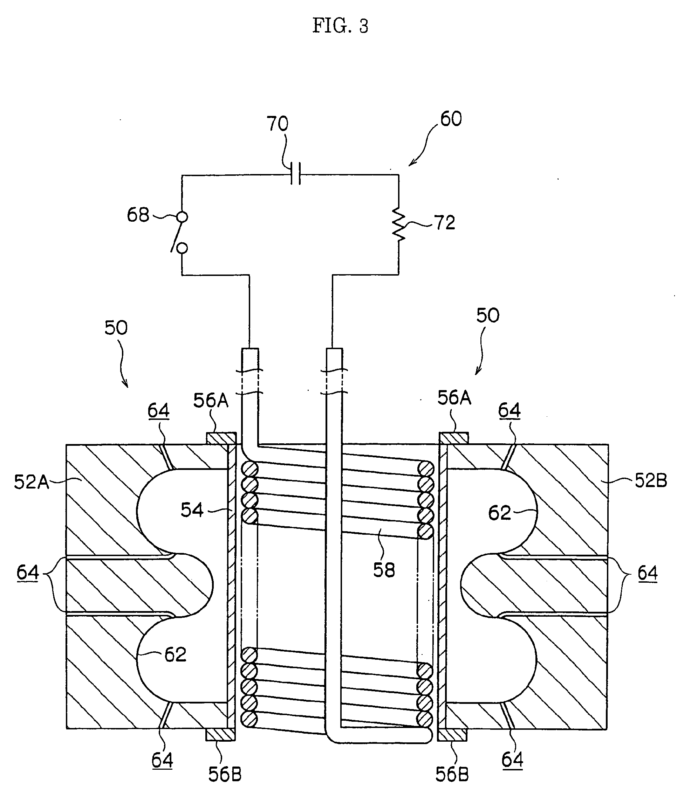

Continuing now, the manufacturing method for the support 16 of the present embodiment will be explained.
Firstly, explanations regarding the forming device that electromagnetically forms the shell 26 of the support 16 will be given. As shown in Fig. 3, a forming device 50 is constituted by metal molds 52A, 52B divided to the left and right; retaining components 56A, 56B that retain an aluminum tube 54, which will be explained later, in a predetermined position when the cylindrical aluminum tube 54 is set by the divided metal molds 52A, 52B; a coil 58 that is inserted into the interior of the aluminum tube 54; and an electric circuit 60 for running an electric current to the coil 58. This electric circuit constitutes a so-called equal value circuit of an impact large current generating circuit, and the electromagnetic energy necessary for processing is controlled by the energy ($E = 1/2\ CV^2$) saved in a condenser 70.

The metal molds 52A, 52B have forming surfaces 62 that correspond to the shape of the shell 26 together with multiple exhaust holes 64 formed at predetermined positions on the forming surfaces 62 that communicate the forming surfaces with the exterior.

Further, the electric circuit 60 is provided with a switch 68, the condenser 70, and a resistor 72, and it is configured to conduct high-voltage current by charging the condenser 70 in advance and connecting the switch 68.

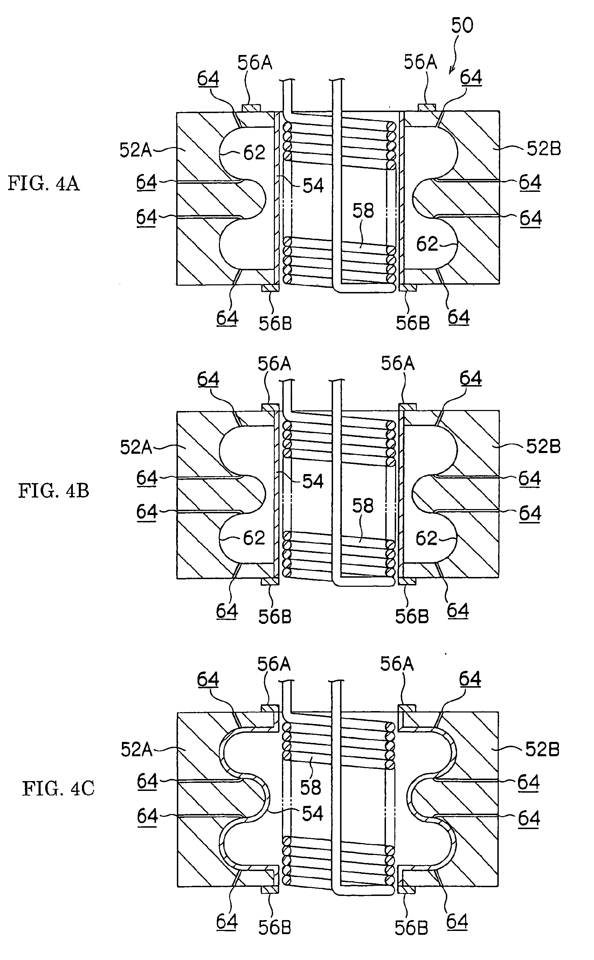

This forming device 50 is used in the following manner to form the shell 26.
First, the metal molds 52A, 52B are divided, and the cylindrical aluminum tube 54 is inserted between the divided metal molds 52A, 52B. The lower end of the aluminum tube 54 is retained by the retaining components 56B. In this state, the coil 58 is inserted into the interior of the aluminum tube 54 (refer to Fig. 4A).

Next, the retaining components 56A of the forming device 50 are slid to hold the upper end of the aluminum tube 54, whereby the upper and lower ends of the aluminum tube 54 are fixed positioned (refer to Fig. 4B).

In this state, guided electric current flows to the aluminum tube 54 while the aluminum tube 54 simultaneously receives pulse energy (electromagnetic energy) according to Fleming's left-hand rule by running electric current to the coil via the circuit 60 of the forming device 50. This electromagnetic energy acts to expand the aluminum tube 54 towards the side of the exterior periphery. By the action of this electromagnetic energy, the aluminum tube 54 is instantly pressed (usually less than 0.1 seconds) by the forming surfaces 62, deformed along the forming surfaces 62, and formed into a predetermined shape (refer to Fig. 4C). At this time, since the deformation of the aluminum tube 54 is instantaneous, it is difficult to discharge the air intervening between the aluminum tube 54 and the forming surfaces 62 of the metal molds 52A, 52B from the vacant spaces of both components to the exterior; however, it is discharged to the exterior smoothly from exhaust holes 64 formed in the metal molds 52A, 52B. Accordingly, hindrance of the forming of the shell 26 at the time of electromagnetic forming due to existing (residual) air can be avoided.

Further, since the shell 26 obtained in this manner is instantly formed by electromagnetic formation from the aluminum tube 54, deformation is completed prior to the occurrence of process hardening that accompanies conventional plasticization deformation of aluminum alloys. Accordingly, the forming qualities of the aluminum alloy improve, and the aluminum alloy can be formed into a predetermined shape with good precision.

Especially in a case where the ratio (B/A) of the largest exterior diameter (diameter) A of the convex portions 30A, 30B of the shell 26 and the smallest exterior diameter (diameter) B of the concave portion 30C (refer to Fig. 2), that is, the ratio of the diameter of the largest elongation and the diameter of the smallest elongation in the cylindrical aluminum tube 54, is in the range of 0.60 to 0.95, good formation is not possible with forming methods such as conventional hydroform forming because cracks and material bends occur due to process hardening at the time of forming. However, since the effects of process hardening can be avoided as described above with electromagnetic formation, good forming is possible.

Further, in cases where the tread portion 24 of the pneumatic tire 14 receives load from the road at the time of run-flat travel, the tread portion 24 deforms so as to expand towards the interior periphery along the widthwise direction, and a phenomenon occurs such that the central vicinity of the tread portion 24 enters in between the two convex portions 30A, 30B (in the concave portion 30C). At this time, if the ratio (B/A) of the largest exterior diameter (diameter) A of the convex portions 30A, 30B of the shell 26 and the smallest exterior diameter (diameter) B of the concave portion 30C is made to be in the range of 0.60 to 0.95, this acts to divide the force to each of the widthwise exterior sides of the two convex portions 30A, 30B at the shell 26 that receives the load from the road through the tread portion 24, and by this division of force, elastic deformation occurs so as to expand towards the exterior side in the widthwise direction in the support 16. The effect of this is that at the time of run-flat travel, the pressing force of the pair of leg portions 28 on the rim 12 in the support 16 increases and the connecting strength of the support 16 to the rim becomes higher, so shifting of the support 16 from the rim 12 in the widthwise direction or peripheral direction and slipping off from the rim 12 can be prevented with certainty.

Moreover, since the shell 26 is formed by electromagnetic forming, manufacturing efficiency increases due to reductions in formation time.

[Second Embodiment]

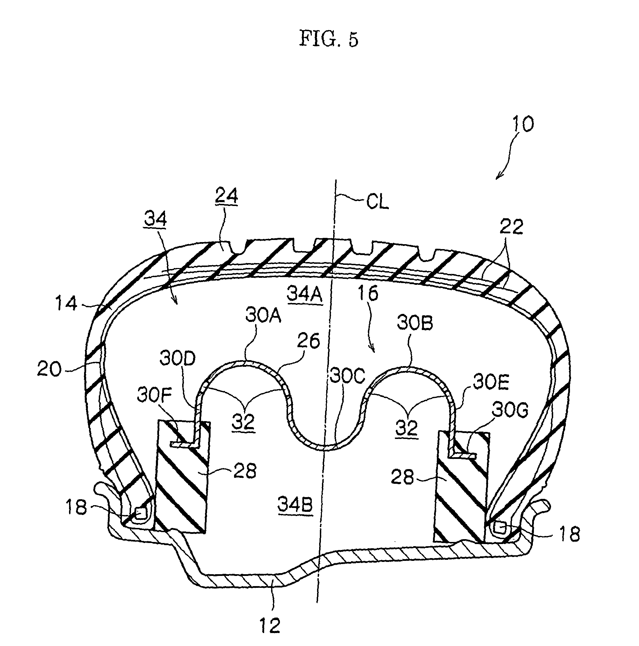

The support, manufacturing method for the support and run-flat tire of the second embodiment of the present invention will be explained while referring to Figs. 5 to 8. Structural elements similar to those of the first embodiment have been given the same reference numbers, and detailed explanations thereof have been omitted.

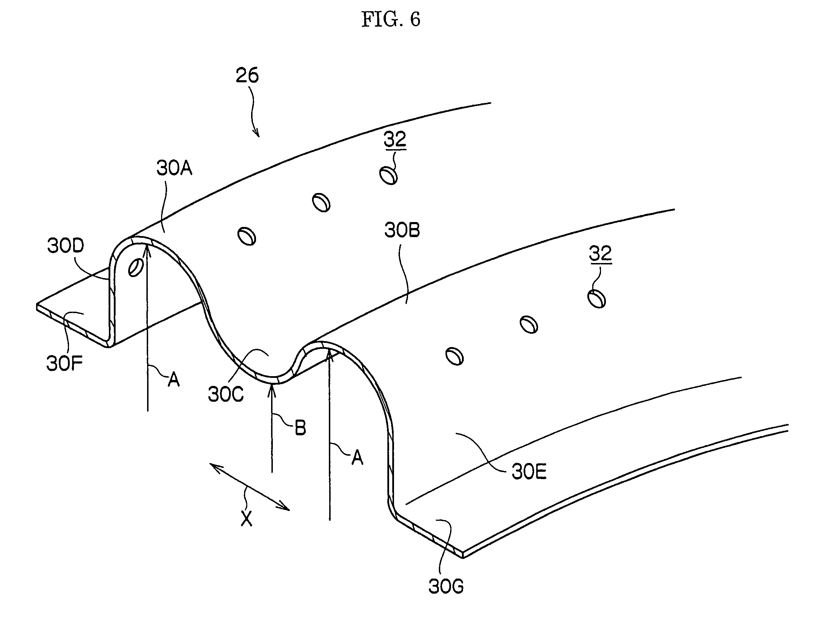

In the support 16 of the second embodiment, the point that differs from the first embodiment is that, as shown in Fig. 6, the shell 26 of the present embodiment has holes 32 formed thereon for the purpose of improving air distribution and to lighten the support 16.

The following is the main reason that holes 32 are formed in the shell 26 in this manner. As shown in Fig. 5, an air chamber 34 in the interior of the pneumatic tire 14 is divided by the support 16 into an air chamber 34A at the outer side in the radial direction and an air chamber 34B at the interior side in the radial direction. Accordingly, in cases where the holes 32 do not exist, the amount of air of the air chamber 34 that performs a buffering action of the shock conveyed from the road through the tread portion 24 becomes the portion of air chamber 34A only, whereby the riding comfort of the vehicle deteriorates. Further, in a (conventional) pneumatic tire having no support 16, the air of the air chamber 34 whose temperature rises during travel is cooled by coming into contact with the metal rim 12 and controlled within a predetermined temperature range. However, in the run-flat tire 10 having the support 16 arranged in the interior side of the pneumatic tire 14, the air of the air chamber 34A of the exterior side of the radial direction is not cooled well because it does not contact the rim 12, and there was a risk of decline of the life of the tire due to increased temperature of the air.

However, by forming the holes 32 on the shell 26, the air chamber 34A and air chamber 34B are in communication so that the above-described buffering action and cooling action function well.

Moreover, it is preferable that the diameters of the holes 32 be set in the range of 0.5mm to 10.0mm, while setting within the range of 0.5mm to 4.0mm is more preferable. By making this diameter 32 of the holes 0.5mm or more, the air distribution of the air chamber 34A and air chamber 34B is ensured, whereby the above-described actions are improved, and by forming holes that are 10.0mm or less, insufficient strength of the shell 26 due to the formation of the holes can be avoided.

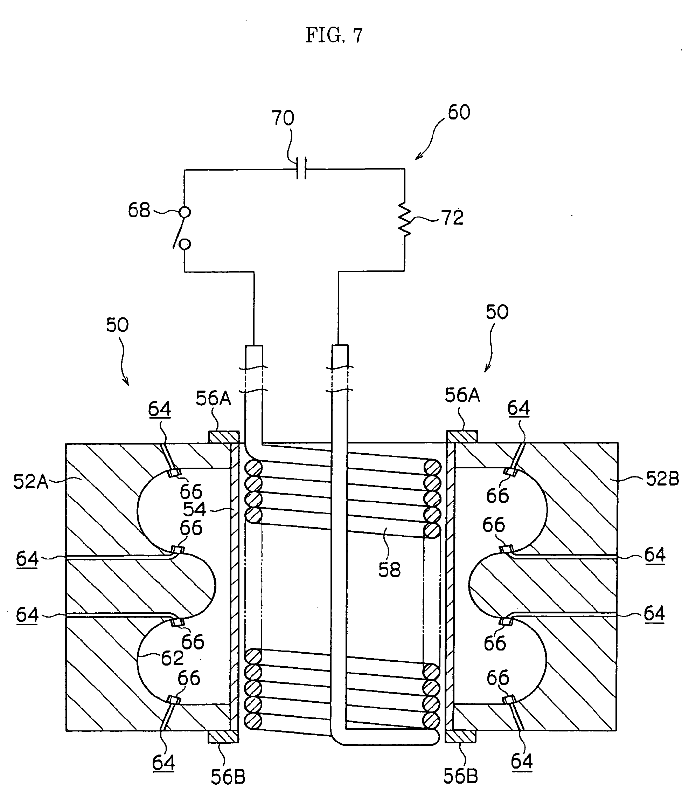

Next, explanations will be given regarding the forming device and the manufacturing method for the support. In a forming device 50 of the present embodiment, the point that differs with the first embodiment is that, as shown in Fig. 7, bladed protrusions 66 having vent holes in communication with the holes 64 are provided at the positions where the exhaust holes 64 open on the forming surfaces 62 of the metal molds 52A, 52B.

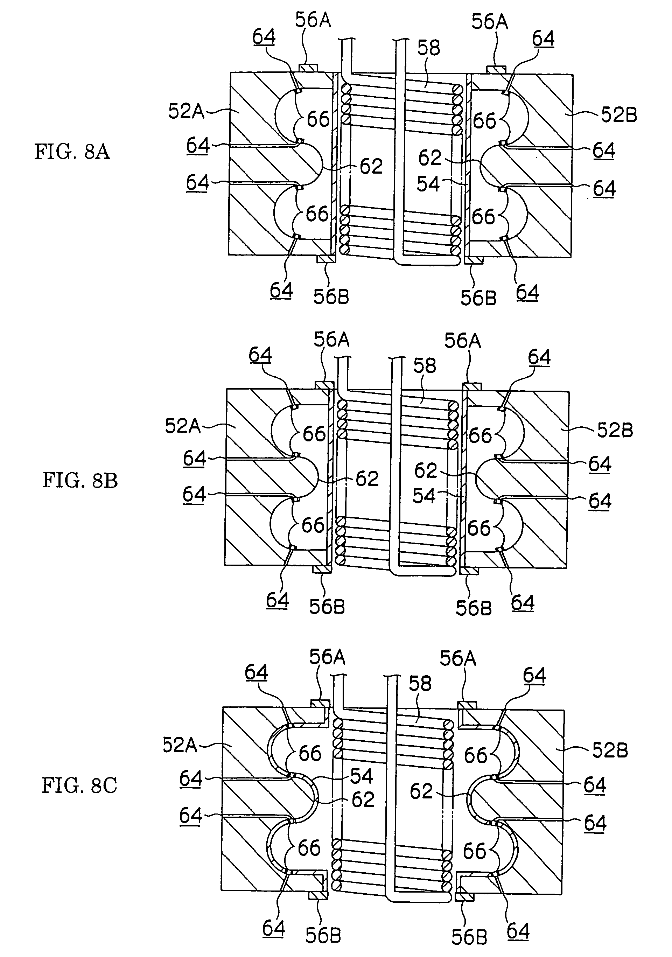

This type of forming device 50 is used to perform electromagnetic formation of the shell 26 in a fashion similar to that of the first embodiment (refer to Fig. 8).

At this time, the aluminum tube 54 stricken on the forming surfaces 62 by electromagnetic forming are pierced (punching is performed) by the edges of the protrusions 66 that are arranged to project from the forming surfaces 62. In other words, formation of the shell 26 and formation of the holes 32 can be performed simultaneously, thereby increasing the manufacturing efficiency of the support 16.

In the present embodiment, the exhaust holes 64 are simultaneously provided in the shell 26 when electromagnetically forming the shell 26 from the aluminum tube 54. However, with regard to the exhaust holes 64, these can be provided in the shell 26 after electromagnetically forming the shell 26 from the aluminum tube 54, by punching processing, drill processing, laser processing, and the like.

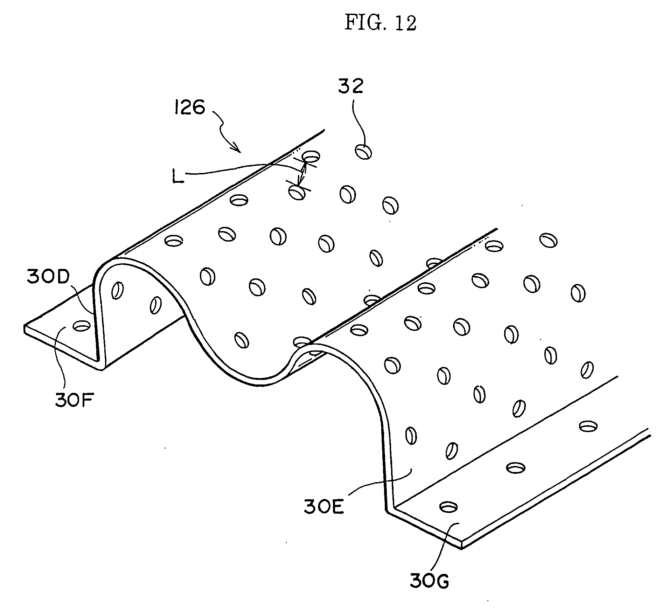

It should be noted that when only considering ensuring the distribution of the air chamber 34A and air chamber 34B of the interior of the pneumatic tire 14, it is sufficient if the holes 32 are formed to the extent of ten-odd to several tens of holes 32 having predetermined diameters on the convex portions 30A, 30B. However, when considering lightening of the support 16 in addition to the air distribution, it is preferable to form a shell 126 having many more of these types of holes 32 than the shell 16, as shown in Fig. 12.

In the shell 126 shown in Fig. 12, holes 32 are formed in the convex portions 30A, 30B (including the concave portion 30C) as well as in the side portions 30E, 30F. The diameters of these holes 32 are, like the shell 26 shown in Fig. 6, set within the range of 0.5mm to 10.0mm (preferably within the range of 0.5mm to 4.0mm). Further, the many holes 32 are set so that the total sum of the areas of the openings is in a ratio of 1-50% relative to the areas (including the areas of the holes 32) of the convex portions 30A, 30B, the concave portion 30C, and the side portions 30E, 30F in the shell 126. This is so for the following reason.

Namely, in a case where the ratio of the areas of the many holes 32 relative to the areas of the convex portions 30A, 30B and side portions 30E, 30F in the shell 126 is less than 1%, the lightening effect with respect to the shell 126 is small, and sufficient air distribution between the air chamber 34A and air chamber 34B sectioned off by the shell 126 cannot be obtained. Meanwhile, in a case where the ratio of the areas of the many holes 32 relative to the areas of the convex portions 30A, 30B and side portions 30E, 30F in the shell 126 exceeds 50%, the strength and durability of the convex portions 30A, 30B and side portions 30E, 30F in the shell 126 greatly deteriorate. For this reason, in the shell 126 of the present embodiment, the balance between the air distribution by the holes 32 and the deterioration in strength of the convex portions 30A, 30B and the side portions 30E, 30F has been considered, and the ratio of the areas of the many holes 32 relative to the areas of the convex portions 30A, 30B and the side portions 30E, 30F is 1-50%.

Furthermore, in the convex portions 30A, 30B and the side portions 30E, 30F, the spaces between the hole edges of the holes 32 arranged so as to adjoin each other are 1mm or more. This is so for the following reason.

Namely, in a case where the spaces between hole edges of the holes 32 arranged so as to adjoin each other are 1mm or less, when the convex portions 30A, 30B and the side portions 30E, 30F in the shell 126 press against the pneumatic tire 14 during run-flat travel, it becomes easier for fissures to occur between the holes 32 arranged so as to adjoin each other due to friction with the pneumatic tire 14. For this reason, in the shell 126, the spaces L between the hole edges of the holes 32 arranged so as to adjoin each other are made to be 1mm or more, and due to this, at the time of run-flat travel, damage to the shell 126 due to fissures between the hole edges of the holes 32 is prevented.

The holes 32 of the shell 126 shown in Fig. 12 can, like the shell 26 shown in Fig. 6, be formed by punching the aluminum tube 54 with the edges of the protrusions 66 at the time of electromagnetic formation, however, in order to punch and form many holes 32 simultaneously with the electromagnetic formation, a large-output forming device 50 that can generate extremely large electromagnetic energy becomes necessary, thus increasing systematic constraints including facility investment. For this reason, it is preferable to use an aluminum metal board that has holes 32 punched in advance (a so-called aluminum punching metal) as the material for the shell 126. By forming the aluminum tube 54 from this punching metal and carrying out the electromagnetic formation, the amount of electromagnetic energy necessary at the time of electromagnetic forming can be suppressed, whereby systematic restraints can be vastly alleviated.

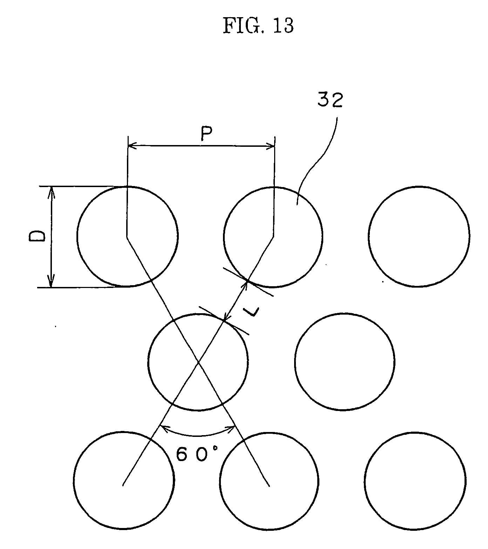

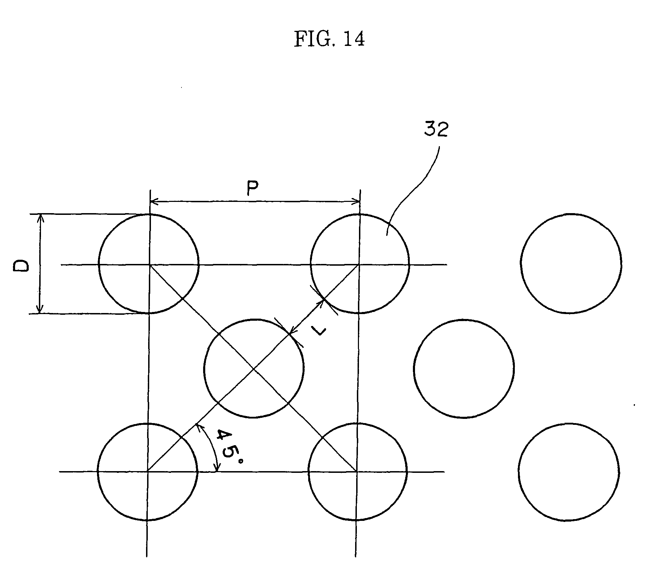

It is preferable that the holes 32 be arranged to be staggered from the viewpoint of strength. For this type of punched pattern of the holes 32, there are the 60° staggered round holes (refer to Fig. 13) and the 45° staggered round holes (refer to Fig. 14).

As shown in Fig. 13, for the 60° staggered round holes, the holes 32 are arranged to be staggered in such a manner that the angle made by the straight lines connecting the centers of the holes 32 is 60°. The ratio of the opening areas relative to the areas of the convex portions 30A, 30B and side portions 30E, 30F in the shell 26 in a case of the 60° staggered round holes (rate of opening) can be found with the following formula when the pitch is defined as P and the diameter of the holes is defined as D.

$$\text{Rate of opening (\%)} = (90.5 \times D^2) / P^2$$

As shown in Fig. 14, for the 45° staggered round holes, the holes 32 are arranged to be staggered in such a manner that the angle made by the straight lines connecting the centers of the holes 32 is 45°. The rate of opening in the case of the 45° staggered round holes can be found with the following formula when the pitch is defined as P and the diameter of the holes is defined as D.

$$\text{Rate of opening (\%)} = (157 \times D^2) / P^2$$

In the present embodiment, explanations regarding cases where the shells 26, 116 are electromagnetically formed with aluminum tube 54 as the forming material have been made. Nonetheless, even in cases where the material for the shell in the support 16 is a metal material such as stainless (SUS) or high-tensile steel (so-called hi-ten) and the like, and forming is carried out by other processing methods such as spatula-press processing, roll-forming processing, hydroform processing and the like, if the diameter of the holes 32, the rate of opening relative to the area of the shell, and spaces between the mutually adjoining holes 32 are each set as explained above, lightening of the support 16 with the holes 32 formed in this shell is achieved while the air distribution between the air chambers 34A, 34B (refer to Fig. 5) inside the pneumatic tire 24 becomes sufficiently high; and partial overheating of the pneumatic tire 24 can be effectively prevented due to the cooling effect of the rim 12.

Further, as shown in Fig. 12, the holes 32 penetrate each of the flange portions 30F, 30G of the shell 126 in the thickness direction and multiple holes are provided along the peripheral direction at approximately equal pitches. Due to this, as already explained in the first embodiment, with the increase in the surface area of the adhered portions of the leg portions 28 in the flange portions 30F, 30G, an anchoring effect is generated by the rubber material filled inside the holes 32, so the connecting strength of rubber leg portions 28 and the flange portions 30F, 30G vastly increases.

[Third Embodiment]

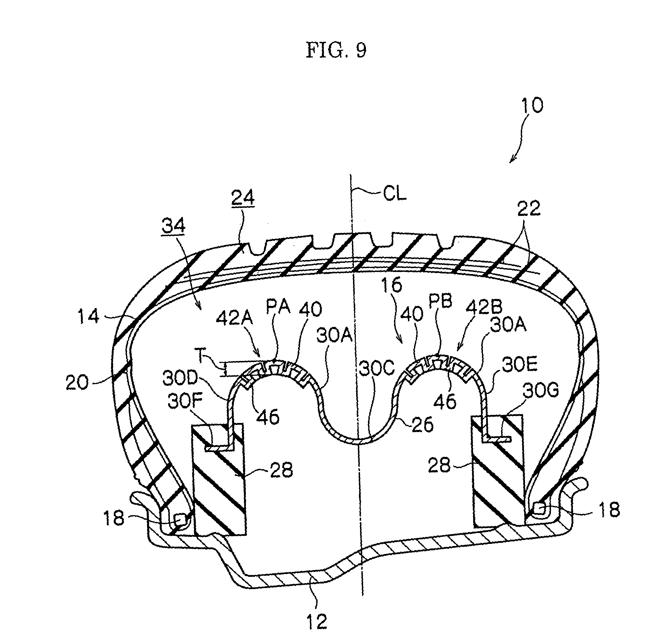

The support, manufacturing method for the support, and run-flat tire of the third embodiment of the present invention will be explained while referring to Figs. 9 to 11. Structural elements similar to those of the first embodiment have been given the same reference numbers, and detailed explanations thereof have been omitted.

In the support 16 of the third embodiment, the point that differs from the first embodiment is that the convex portions 30A, 30B in the shell 26 have reinforcing portions 42A, 42B each reinforced by providing ribs 40, as shown in Fig. 9.

The reason for thus providing reinforcing portions 42A, 42B to each of the convex portions 30A, 30B in the shell 26 is as follows.

Namely, an object where two convex portions 30A, 30B are formed is used as the shell 26 of the support 16 and is arranged in the interior pneumatic tire 10 of the support 16 and when run-flat travel is carried out with this pneumatic tire 10, each of the convex portions 30A, 30B remains in contact with the tread, and run-flat travel is performed. Accordingly, providing two convex portions 30A, 30B acts on the shell 26 to disperse the load from the road to two points so the accumulation of load on one point of the shell 26 during run-flat travel can be avoided and the load to the shell 26 can be reduced.

Nonetheless, at the time of run-flat travel, the load from the road accumulates during travel in the vicinity of peaks PA, PB, which are positioned at the outermost exterior periphery in the shell 26. In the shell 26, damage such as cracks and dents easily occur in the vicinity of the peaks PA, PB, and the strength of these peaks PA, PB has a large effect on the durability of the shell 26.

Meanwhile, when the shell 26 having the convex portions 30A, 30B is formed from the aluminum tube 54 by electromagnetic forming (electromagnetic tube expansion formation), the vicinity of the peaks PA, PB of the convex portions 30A, 30B, whose amount of deformation is large, is spread towards the exterior sides in the widthwise directions and the thickness thereof becomes thinner than other portions. As previously discussed, the vicinity of the peaks PA, PB of the convex portions 30A, 30B of the shell 26 is the portion where, during run-flat travel, the load from the road accumulates, and thus when using this shell 26 for run-flat travel, there is a risk of dents and cracks occurring early in the vicinity of the peaks PA, PB of the convex portions 30A, 30B due to load such as shock and the like from the road.

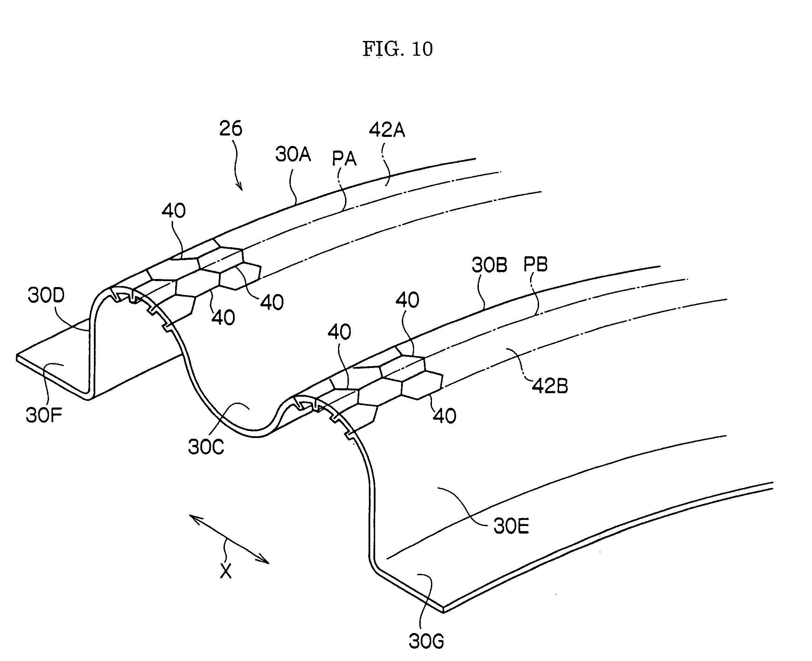

Here, as shown in Figs. 9 and 10, the shell 26 of the present embodiment has reinforcing portions 42A, 42B that extend across the entire periphery along the peripheral direction in the vicinity of the peaks PA, PB of each of the convex portions 30A, 30B. The reinforcing portions 42A, 42B are provided by sequentially forming honeycomb-shaped (in the present embodiment, hexagonal) ribs 40 in the vicinity of the peaks PA, PB of the shell 26. Due to this, the load-bearing strength such as bending strength and buckling strength of the vicinity of the peaks PA, PB of the convex portions 30A, 30B, whose thickness became thinner than other portions, can be increased to become approximately equal to the strength when thickened to the same degree of thicknesses of the ribs 40. For this reason, the occurrence of damage such as cracks and dents in the vicinity of the peaks PA, PB of the convex portions 30A, 30B due to load such as shock and the like from the road can be effectively prevented.

At this time, by making the cross-sectional shapes following along the peripheral direction of the ribs 40 approximately honeycombed (in the present embodiment, hexagonal), the strength relative to the vicinity of the peaks of the convex portions 30A, 30B can be increased more efficiently than in cases when providing ribs having other forms (e.g., ring-shaped ribs extending along the peripheral direction). However, reference here to honeycombed ribs 40 means ribs, in a broad sense, used with a regular honeycomb structure. For example, staggered hexagons, square shapes linked with six partitions at four points, sine wave shapes and multiple wave shapes are included.

As shown in Fig. 9, the ribs 40 are formed by indenting the shell 26 from the exterior periphery to the interior periphery with U shapes and forming partition portions 46 projecting towards the interior periphery. Accordingly, when viewing the reinforcing portions 42A, 42B from the exterior periphery side of the shell 26, these can be seen as a region on the exterior periphery surface in which grooves extending hexagonally successively continue, and when viewed from the interior periphery side, these can be seen as a region on the interior periphery surface on which protrusions hexagonally extend and susccessively continue.

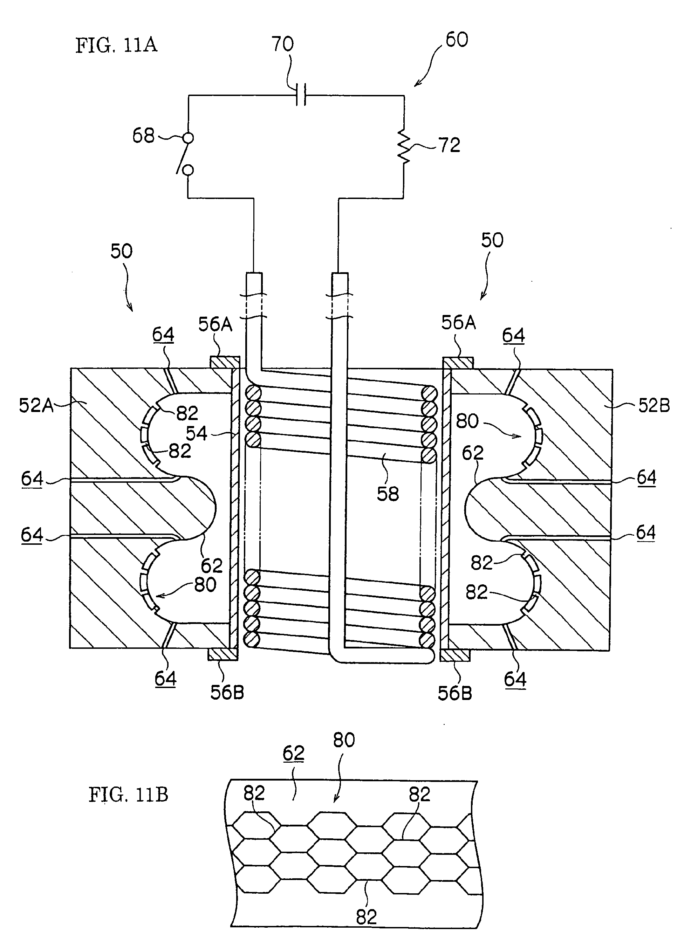

In order to give an easy understanding, the ribs 40 shown in Figs. 9 and 10 and the rib transferring portions 80 for transferring and forming the ribs 40 on the shell 26 shown in Fig. 11, the ribs 40 and the rib transferring portions 80 are shown as enlarged to sizes several tens times larger than the actual sizes.

Here, it is preferable that the thickness T (see Fig. 9) along the radial direction of the ribs 40 be 0.2mm or more and 5mm or less. That is, when it is 0.2mm or less, sufficient reinforcing effect as ribs cannot be obtained, and when it is 5mm or more, the processing amount (spreading amount) relative to the shell 26 becomes excessive and it becomes easier for cracks to occur in the vicinities of the peak portions of the ribs.

Further, it is preferable that the pitch along the peripheral direction and width direction be 2mm or more and 20mm or less. That is, when it is 2mm or less, the forming qualities at the time of transfer forming, which will be described later, become markedly bad and it becomes impossible to form the ribs 40 of sufficiently accurate measurements, and when it is 20mm or more, it becomes impossible to sufficiently obtain a reinforcing effect as ribs. In the present embodiment, the 10mm regions to the left and right (entire width of 20mm region) along the widthwise direction from the peaks PA, PB in the convex portions 30A, 30B are each the reinforcing portions 42A, 42B. This is in consideration of inputting the load from the road at the time of run-flat travel to within the region of the 10mm width to the left and right along the widthwise direction from the peaks PA, PB.

Similar to the support of the second embodiment, the shell 26 of the support 16 of the present embodiment can also have exhaust holes 64 provided in order to distribute air within the pneumatic tire 10. These types of exhaust holes 64 can be provided by punching with edges of protrusions formed on the forming surfaces of the metal molds at the time of electromagnetic forming using the aluminum tube 54 as the material, or after completion of electromagnetic formation, the exhaust holes 64 can be provided in the shell 26 by punching, drill processing, laser processing, and the like.

Next, explanations will be given regarding the forming device and the manufacturing method for the support. The point of the forming device 50 of the present embodiment that differs from that of the first embodiment is, as shown in Fig. 11, the forming surfaces 62 of the metal molds 52A, 52B have rib transferring portions 80 formed on the portions corresponding to each of the reinforcing portions 42A, 42B.

Electromagnetic formation similar to that of the first embodiment is performed on the shell 26 using this type of forming device 50. The process for forming the portions that remove the reinforcing portions 42A, 42B of the shell 26 is basically the same as the forming process of the shell 26 shown in Fig. 4, so explanations thereon have been omitted.

Here, as shown in Fig. 11(B) hexagonally extending protruding portions 82 successively continue in a region on the forming surfaces 62. These rib transferring portions 80, when the aluminum tube 54 is pressed with strong force against the forming surfaces 62 at the time of electromagnetic forming, plasticize form along the portions of the protruding portions 82 corresponding to the reinforcing portions 42A, 42B in the aluminum tube 54 in an extremely short amount of time (usually within 0.1 seconds). By this, the ribs 40 are successively formed in predetermined regions including the peaks PA, PB in the convex portions 30A, 30B in the shell 26 formed by electromagnetic formation, and the region in which these ribs 40 are formed is made the reinforcing portions 42A, 42B of the convex portions 30A, 30B.

In the present embodiment, by electromagnetically forming the honeycombed ribs 40 on the shell 26 while simultaneously forming the shell 26 as described above, these ribs 40 can also be formed in the super-plasticized deformation region by deforming the aluminum tube 54 without receiving any of the effects of process hardening. For this reason, cracks and bends and the like do not occur, and the ribs 40 can be formed on the shell 26 having the desired the shape and accurate measurements.

[Examples]

(Comparative Test 1)

In order to confirm the operatuions of the forming methods of the above-described embodiments 1 and 2, the below Examples 1 and 2 regarding the support (below, simply referred to as Examples 1, 2) and a comparative test of the support for Comparative Example A (below, simply referred to as Comparative Example A) were performed.
An aluminum tube (400mm diameter, 200mm height, 2.3mm thickness) made from a JIS6061 aluminum alloy (Al-Mg-Si aluminum alloy) was formed according to the following forming method with metal molds in which the diameter A (refer to Fig. 2) of the peaks (outermost positions in the radial direction) of the convex portions are 480mm, and each test was performed according to the following method.
Here, in Comparative Example A, froming was carried out by hydroform forming using metal molds having forming surfaces similar to those in the first embodiment.
Meanwhile, in Example 1, the forming device is similar to that of the first embodiment, but electromagnetic forming was performed with metal molds having no exhaust holes. In the forming device, after storing electricity in the the 1000μm circuit 60 with a 15kV power source and inserting the coil into the aluminum tube, the coil was energized, whereby the support was formed
Example 2 has a structure similar to that of the second embodiment 2, namely, this is a case where the metal molds of Example 1 provided with exhaust holes 64 and protrusions 66 were used for forming. The protrusions 66 are formed to project at a height of 3mm from the forming surfaces 62 so as to be able to form holes having 2mm diameters on the shell 26 (aluminum tube 54). These exhaust holes 64 and protrusions 66 are formed cross-sectionally in four places in the second embodiment, but in Example 2, 8 places were provided along the widthwise direction to both ends and in 20 places at even spaces in the peripheral direction, for a total of 160 places. Further, the energizing conditions are the same as in Example 1.
The results of the test are shown in Chart 1.

[Chart 1]

|  |  | Comparative Example A | Example 1 | Example 2 |
|---|---|---|---|---|
| | Results | Cracks on the periphery at the convex portion peaks occurred. | The diameters of the peaks of the convex portions became 480mm. | The diameters of the peaks of the convex portions became 480mm. Holes with 2mm diameters were also formed simultaneously. |

In this manner, in cases where a forming time such as that of Comparative Example A is necessary, it was confirmed that due to process hardening during the forming of the support (deformation of aluminum) good forming could not be achieved (cracks on the periphery at the convex portion peaks occurred). In contrast, as seen in Examples 1 and 2, since the aluminum tube is instantly deformed with electromagnetic forming, cracks in the convex portions of the support do not occur as they do in Comparative Example A. However, in embodiment 1, since there are no exhaust holes in the metal molds, the convex portions 30A, 30B of the shell 26 are formed shallower than the metal molds due to residual air between the metal molds and the aluminum tube. In contrast to this, in the case of embodiment 2, the air between the aluminum tube and the metals molds is quickly discharged by the exhaust holes 64 of the metal molds, so it was confirmed that the measurement accuracy was improved in comparison with embodiment 1. Namely, it was confirmed that the convex portions 30A, 30B and the like were formed in accordance with the forming surfaces 62 of the metal molds and the holes 32 were formed in predetermined positions.

(Comparative Test 2)

Next, in order to confirm the operation of the aforementioned embodiment 3, comparative tests were performed for the support of Example 3 shown below (hereafter, simply referred to as Example 3) and the support of Comparative Example B (hereafter, simply referred to as Comparative Example B).
An aluminum tube (400mm diameter, 200mm height, 1.6mm thickness) made from a JIS6061 (O material) aluminum alloy (Al-Mg-Si aluminum alloy) was formed according to the following forming method with metal molds in which the diameters A (refer to Fig. 2) of the peaks (outermost position in the radial direction) of the convex portions were 480mm, and each test was performed according to the following method..

Here, Comparative Example B uses a forming device including metal molds having forming surfaces that are similar to those in the first embodiment to form by electromagnetic formation (electromagnetic tube expansion formation).

Meanwhile, the structure of Example 3 is similar to that in the third embodiment, namely, a device having the exhaust holes 64 and the rib transferring portions 80 provided in the metal molds of Example 1 was used to form. The rib transferring portions 80 are set on the forming surfaces 62 with a projection length and the like to have, on the shell 26 (aluminum tube 54) a height of 1mm, so as to be able to form the ribs 40 successively at a rib pitch of 5mm and the peaks PA, PB in the shell 26 are the center and regions corresponding to the portions 10mm each to the left and right correspond are provided. Further, the charging conditions are the same as those for embodiment 1.

After heat-processing the shell electromagnetically formed as above with a heat-processing condition of T6 (after dissolution processing, artificial prescription) rubber leg portions were adhered, and a support provided with the manufactured shell of Comparative Example B and a support provided with the shell of Example 3 were each set within a pneumatic tire. Adjustments to the tire load were made so that the wheel weight became 500kgf, and the test results of the performed run-flat travel are shown in Chart 2.

[Chart 2]

| | Comparative Example B | Example 3 |
|---|---|---|
| Stable travel distance | 50km | 300km or more |
| Observation results after travel | Light dents and cracks occurred in convex portions. | Deformation and damage in the convex portions that would affect travel do not occur. |

As evident from Chart 2, when using Comparative Example B for run-flat travel, changes in travel performance including the occurrence of vibrations and the like occurred with run-flat travel of about 50km. When the shell was observed at that point, changes in the shell itself had occurred, and light dents and cracks occurred in the peak vicinities of the convex portions.

On the other hand, when using Example 3 for run-flat travel, even when run-flat travel was carried out for 300km or more, no obvious changes in the travel performance including vibration and the like occurred, and good travel was maintained. At the point where the travel distance exceeded 300km, upon observing the shell, the shell itself had not deformed, and no dents or cracks that would affect travel performance had occurred in the peak vicinities of the convex portions.

As is clear from the above explanations, sufficient lightening and high durability are realized with the run-flat tire support of the present invention, and a support having a shell component formed with good precision in a predetermined shape can be realized.

Furthermore, with the run-flat tire support manufacturing method of the present invention, sufficient lightening of the shell component can be given while providing the shell component with high durability, and further, the shell component can be formed in a predetermined shape with good precision.

Moreover, with the run-flat tire of the present invention, the shell component in the support arranged inside the pneumatic tire is sufficiently lightened while being provided with high durability, and furthermore, since it is formed into a predetermined shape with good precision, the gas mileage and handling can be improved.

(Comparative Test 3)

In order to confirm the operation of the shell 126 shown in Fig. 12, comparative tests of the shell of Example 4 shown below (hereafter simply referred to as Example 4) and the shells of two Comparative Examples C and D (hereafter these are referred to as Comparative Example C and Comparative Example D) were performed.

In Example 4, the shape is almost identical to the shell 126 shown in Fig. 12 and was formed with a plate material SUS304 having a thickness of 1.0mm, hole opening rate of 26%, hole diameters of 3.0mm, and 45° round staggered holes.

Meanwhile, Comparative Example C was formed with a plate material SUS304 having a thickness of 1.0mm and no holes, and a test sample was obtained.

Further, Comparative Example D was formed with a plate material SUS304 having a thickness of 1.0mm, a hole opening rate of 60%, hole diameters of 3.0mm, and 45° round staggered holes, and a test sample was obtained.

The result of an actual car travel test was that in the case of Example 4 as well as the case of Comparative Example C, 300km of travel was completed without buckling deformation. However, in the case of Comparative Example D, buckling deformation occurred at 90km. Further, in the case of Example 4, the gas mileage was improved when compared to the case of Comparative Example C.

**Claims**

1. A run-flat tire support which is arranged in the interior of a pneumatic tire and attached to a rim together with the pneumatic tire, the run-flat tire being annular and capable of supporting a load at a time of run-flat travel, the run-flat tire support being **characterized in that** it has a cylindrical shell component attached to the exterior periphery side of the rim, and a material for the shell component is an aluminum alloy that is electromagnetically formed.

2. The run-flat tire support of claim 1 **characterized in that** holes having diameters of 0.5mm to 10.0mm are formed in the shell component.

3. The run-flat tire support of claim 1 or 2 **characterized in that** the aluminum alloy is any one of an Al-Mg aluminum alloy, an AL-MG-Si aluminum alloy, and an AL-Zn aluminum alloy.

4. The run-flat tire support of any one of claims 1 to 3, **characterized in that** the shell component has two convex portions projecting toward the exterior side in a radial direction in a radial cross section.

5. The run-flat tire support of claim 4, **characterized in that** a ratio B/A of a maximum exterior diameter of the convex portions A and a minimum exterior diameter B of the concave portion formed between the two convex portions in the shell component is from 0.60 to 0.95.

6. The run-flat tire support of any one of claims 1 to 5 **characterized in that** the board thickness of the shell component is from 0.5mm to 7.0mm.

7. A run-flat tire support which is arranged in the interior of a pneumatic tire and attached to a rim together with the pneumatic tire, the run-flat tire support being annular and capable of supporting a load at a time of run-flat travel, the run-flat tire support being **characterized in that** it is provided with at least two convex portions in a radial direction cross section of the support, each projecting towards an exterior side in the radial direction, and has a cylindrical shell component attached to an exterior periphery side of the rim, and cross sections along the peripheral direction in the vicinities of peak portions positioned at outermost periphery sides of the convex portions are honeycombed ribs that are successively formed on the entire periphery.

8. The run-flat tire support of claim 7, **characterized in that** holes having diameters of 0.5mm to 10.0mm are formed in the shell component.

9. The run-flat tire support of claim 7 or 8, **characterized in that** the shell component is formed by electromagnetic formation from any one of an Al-Mg aluminum alloy, an Al-Mg-Si aluminum alloy, and an Al-Zn aluminum alloy as the material.

10. A run-flat tire support manufacturing method for manufacturing a support which is arranged in the interior of a pneumatic tire and attached to a rim together with the pneumatic tire, the run-flat tire support being annular and capable of supporting a load at a time of run-flat travel, the method being **characterized in that** it includes:

   a first process for setting a cylindrical aluminum tube made from an aluminum alloy in a forming jig;
   a second process for loading the forming jig in order to prevent the aluminum tube from shifting position in upper or lower directions; and
   a third process in which a coil is inserted into the aluminum tube and an electric current is run to the coil, whereby the aluminum tube is deformed to expand to an exterior side in a radial direction and a cylindrical shell component that is installed to the exterior periphery side of a rim is formed.

11. The run-flat tire support manufacturing method of claim 10, **characterized in that** after the third process, it includes a process for forming holes having diameters of 0.5mm to 10.0mm in the shell component.

**12.** A run-flat tire support manufacturing method for manufacturing a support which is arranged in the interior of a pneumatic tire and attached to a rim together with the pneumatic tire, the run-flat tire support being annular and capable of supporting a load at a time of run flat travel, the method being **characterized in that** it includes:

a first process for setting a cylindrical aluminum tube made from an aluminum alloy inside a forming jig; a second process for loading the forming jig in order to prevent the aluminum tube from shifting position in upper or lower directions; and a third process in which a coil is inserted into the aluminum tube and an electric current is run to the coil, whereby the aluminum tube is deformed to expand to an exterior side in a radial direction and a cylindrical shell component that is installed to the exterior periphery side of a rim is formed while holes having diameters of 0.5mm to 10.0mm are formed in the support at the time of expanding deformation.

**13.** A run-flat tire support manufacturing method for manufacturing the run-flat tire support of any one of claims 7 to 9, the method being **characterized in that** it includes:

a first process for setting a cylindrical aluminum tube made from an aluminum alloy inside a forming jig; a second process for loading the forming jig in order to prevent the aluminum tube from shifting position in upper or lower directions; and a third process in which a coil is inserted into the aluminum tube and an electric current is run to the coil, whereby the aluminum tube is deformed to expand to the exterior side in the radial direction and the shell component is formed,

wherein in the third process, by protruding portions provided in interior periphery surface of the forming jig and having a honeycombed cross section along the peripheral direction, the vicinities of the peak portions of the convex portions are plastically deformed, whereby the ribs are formed in the vicinities of the peak portions.

**14.** The run-flat tire support manufacturing method of claim 13, **characterized in that** in the third process, by protruding portions provided in interior periphery surface of the forming jig and having a honeycombed cross section along the peripheral direction, the vicinities of the peak portions of the convex portions are plastically deformed, whereby the ribs are formed in the vicinities of the peak portions. while holes having diameters of 0.5mm to 10.0mm are formed in the shell component.

**15.** The run-flat tire support manufacturing method of claim 13, **characterized in that** after the third process, it includes a process for forming holes having diameters of 0.5mm to 10.0mm in the shell component.

**16.** The run-flat tire support manufacturing method of any of claims 10 to 15 **characterized in that** in the third process, air intervening between the aluminum tube and the forming jig is discharged to the exterior through exhaust holes provided in the forming jig.

**17.** A run-flat tire **characterized in that** it comprises:

a pneumatic tire attached to a rim, the tire compirising a toroidal carcass formed between a pair of bead cores, side rubber layers forming tire side portions arranged at tire axial direction exterior side of the carcass, and a tread rubber layer forming the tread portion arranged at the exterior side of radial direction carcass tire; and a run-flat tire support of any of claims 1 to 9, the run-flat tire support being arranged in the interior of the tire and attached to the rim together withn the tire.

**18.** A run-flat tire support which is arranged in the interior of a pneumatic tire and attached to a rim together with the pneumatic tire, the run-flat tire support being annular and capable of supporting a load at a time of run-flat travel, the run-flat tire support being **characterized in that** it is provided with at least two convex portions that each project towards a radial directrion exterior side in a radial diection cross section of the support, and has a cylindrical shell installed to an exterior periphery side of the rim, and multiple holes that penetrate in the thickness direction are formed in the convex portions.

**19.** The run-flat tire support of claim 18, **characterized in that** a material of the shell component is any one of an aluminum alloy, high-tensile steel, and stainless steel.

**20.** The run-flat tire support of claim 18 or 19, **characterized in that** a ratio of an area of the multiple holes relative to an area of the convex portions including the multiple holes is made to be 1-50%.

**21.** The run-flat tire support of any of claims 18 to 20, **characterized in that** from end portions of exterior sides in the widthwise direction of the convex portions in the shell component to side portions extending to the exterior periphery sides, multiple holes that penetrate in the thickness direction are formed.

**22.** The run-flat tire of claim 21, **characterized in that** an area of the multiple holes relative to an area of the side portions including the multiple holes is made to be 1-50%.

**23.** The run-flat tire support of any of claims 18 to 22, **characterized in that** spaces between hole edges of the holes arranged so as to adjoin each other are made to be 1mm or more.

**24.** A run-flat tire **characterized in that** it has
  a toroidal carcass formed between a pair of bead cores,
  side rubber layers forming the tire side portions arranged at the exterior side of the tire axial direction of the carcass,
  a tread rubber layer forming the tread portion arranged at the exterior side of radial direction carcass tire,
  a tire installed to a rim, and
  any one of the run-flat tire supports recited in claims 18 to 23 arranged in the interior of the tire and attached with the tire to the rim.

FIG. 1

FIG. 2

FIG. 3

FIG. 4A

FIG. 4B

FIG. 4C

FIG. 5

FIG. 6

26

30A

32

30B

32

30E

30D

30F

30C

30G

A

B

A

X

FIG. 7

FIG. 8A

FIG. 8B

FIG. 8C

FIG. 9

FIG. 10

EP 1 561 606 A1

FIG. 11A

FIG. 11B

FIG. 12

FIG. 13

FIG. 14

| INTERNATIONAL SEARCH REPORT | International application No. |
|---|---|
| | PCT/JP03/11829 |

**A. CLASSIFICATION OF SUBJECT MATTER**
Int.Cl$^7$ B60C17/04, B21D26/14, B21D53/26

According to International Patent Classification (IPC) or to both national classification and IPC

**B. FIELDS SEARCHED**

Minimum documentation searched (classification system followed by classification symbols)
Int.Cl$^7$ B60C17/04, B60C17/06, B21D26/14, B21D53/26

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 10-297226 A (CONTINENTAL AG.), 10 November, 1998 (10.11.98), Claims 9, 13; Par. No. [0019]; Figs. 1 to 3 & EP 860304 A3 | 1-24 |
| Y | JP 6-312226 A (Showa Aluminum Corp.), 08 November, 1994 (08.11.94), Full text; Fig. 6 (Family: none) | 1-6,9-17 |
| Y | JP 6-312229 A (Showa Aluminum Corp.), 08 November, 1994 (08.11.94), Full text; Figs. 1 to 8 (Family: none) | 1-6,9-17 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 December, 2003 (24.12.03) | 20 January, 2004 (20.01.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 561 606 A1**

## INTERNATIONAL SEARCH REPORT

| | International application No. |
|---|---|
| | PCT/JP03/11829 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-24969 A (Kabushiki Kaisha Nippon Seikosho), 30 January, 1996 (30.01.96), Full text; Fig. 1 (Family: none) | 1-6,9-17 |
| Y | JP 7-184350 A (Hitachi, Ltd.), 21 July, 1995 (21.07.95), Par. No. [0062]; Fig. 23 (Family: none) | 7-9,13-17 |
| Y | JP 2001-130600 A (Dainippon Printing Co., Ltd.), 15 May, 2001 (15.05.01), Par. No. [0017] (Family: none) | 7-9,13-17 |
| Y | EP 857622 A1 (LEMFORDER METALLWAREN AG.), 12 August, 1998 (12.08.98), Fig. 4 & US 6152479 A1 & JP 2956835 B2 | 7-9,13-17 |
| Y | JP 54-59702 A (The Yokohama Rubber Co., Ltd.), 14 May, 1979 (14.05.79), Figs. 1, 2 (Family: none) | 8,9,12-24 |
| Y | JP 3243291 B2 (Bridgestone Corp.), 19 October, 2001 (19.10.01), Par. No. [0008] (Family: none) | 8,9,12-24 |
| A | WO 99/19158 A1 (CONTINENTAL AG.), 22 April, 1999 (22.04.99), Full text & JP 2001-519279 A | 1-24 |

Form PCT/ISA/210 (continuation of second sheet) (July 1998)